# EUROPEAN PATENT APPLICATION

(11) **EP 3 951 679 A1**
(43) Date of publication of application: **09.02.2022**
(21) Application number: 21180898.5
(22) Date of filing: 22.06.2021
(51) Int. Cl.: G06Q 10/06

(54) **REAL TIME MULTIPLE AGENT ENGAGEMENT DECISION SYSTEM**

(30) Priority: 07.08.2020 US 202063062658 P
(71) Applicant: The Boeing Company, Chicago, IL 60606 (US)
(72) Inventor: HUI, Leo H., CHICAGO, 60606 (US); KRIKORIAN, Haig, Francis, CHICAGO, 60606 (US)
(74) Representative: Bugnion S.p.A. - US1

(57) **Abstract**

Agent/client pairs in at least one priority tier are determined. A matrix value is determined for each agent/client pair based on the client rank of the agent/client pair. An engagement capability parameter is determined for each agent/client pair. The matrix value for each disallowed agent/ranked client value is set to a zero value. All possible engagement options are evaluated. Candidate pair paths are determined by determining pair paths having a highest initial path value. The initial path value of each candidate pair path is decreased based on agent/client pairs in the candidate pair path that are urgent agent/client pairs or risky agent/client pairs to derive a final path value for each candidate pair path. A best path is determined based on the final path value for each candidate pair path. At least one engagement decision is derived based on the best path and transmitted towards agents in the best path.

## Description

### BACKGROUND

The present disclosure relates generally to autonomous decision systems, and more particularly to methods and related devices supporting autonomous decision systems.

A Multiple Agent Engagement Decision System (MAEDS) provides timely decision for its autonomous agents to engage high value clients. There are few MAEDS in existence since multiple clients and multiple autonomous agents must exist for this subject to arise, but in today's business, multiple client engagements by multiple agents is in need. As collective use of agents without managerial intervention become more prevalent, a MAEDS to coordinate client engagements is essential to service success and not losing valued clients.

A MAEDS faces several challenges in multiple agent engagement decision making. These challenges include difficulties in making multiple agent engagement decisions, difficulties in making timely coordinated multiple engagement decisions, difficulties in time and resource management to automatically adjust to new change drivers as the engagement evolves, and difficulties in avoiding hasty decisions that lead to waste of an agent's engagement capability and reduction of engagement options.

### SUMMARY

There are few MAEDS in existence. The reason for this is that MAEDS are fairly rare since multiple clients and multiple autonomous agents must exist for a MAEDS to arise, but in today's business, multiple client engagements by multiple agents is in need. As collective use of agents without managerial intervention become more prevalent, a MAEDS to coordinate client engagements is essential to service success and not losing valued clients.

According to some examples of inventive concepts, a method of generating a coordinated set of engagement parameters by a processor in a multiple agent engagement decision system is provided. The method includes determining agent/client pairs in at least one priority tier based on a number of clients and a number of agents, wherein each agent/client pair has an agent, a client and a client rank of the client. The method further includes determining a matrix value for each agent/client pair based on the client rank of the client of the agent/client pair. The method further includes determining an engagement capability parameter for each agent/client pair. The method further includes setting the matrix value for each disallowed agent/ranked client value to a zero value, wherein a disallowed agent/client pair has an engagement capability margin that is below a defined threshold. The method further includes evaluating a plurality of engagement options wherein each engagement option is a pair path from an agent/client pair having a highest client rank to an agent/client pair having a lowest client rank with each pair path having an agent/client pair for each client in the at least one priority tier. The method further includes computing an initial path value of each pair path. The method further includes determining candidate pair paths by determining pair paths having a highest initial path value, wherein the pair paths having the highest initial path value are candidate pair paths. The method further includes for each candidate pair path, decreasing the initial path value of the candidate pair path based on agent/client pairs in the candidate pair path that are urgent agent/client pairs and based on agent/client pairs in the candidate pair path that are risky agent/client pairs to derive a final path value for the candidate pair path. The method further includes determining a best path based on the final path value for each candidate pair path. The method further includes deriving at least one engagement decision based on the best path. The method further includes transmitting the at least one engagement decision towards agents in the best path.

An advantage that can be achieved with the inventive concepts is that the MAEDS is a real-time system for autonomous agents that can provide a timely coordinated set of client engagement decisions for multiple autonomous agents to serve high value clients in the presence of a dynamically changing customer environment. Timely coordinated client engagement decisions are beneficial for saving agent engagement capability, engage as many high value clients as number of agents (ensure favoring highest value clients with one-on-one service), and flexible to client environment changes. The client environment dynamics may include the evolution of clients arriving, client value awareness, engagement opportunity, managerial directives, agent resources, engagement preclusions left by past service decisions, changing agent and client positions and status, and engagement urgency. This improves operation of the autonomous agents because using the MAEDS significantly reduces and in some aspects, eliminates hasty decisions that lead to waste of agent engagement capability and reduction of engagement options.

Another advantage that can be achieved is that the MAEDS can provide orderly decision making without managerial intervention using collective client valuation and awareness data compared to current agent engagement approaches that rely only on pre-planned engagement scenarios and are usually done for one agent engaging one client at a time.

In some examples of inventive concepts, determining the agent/client pairs in the at least one priority tier based on the number of clients and the number of agents includes dynamically obtaining, from a status processor, the number of clients, the number of agents, and for each client, the client rank of each client; determining, based on the number of clients, the client rank of each client, and the number of agents, the at least one priority tier; and grouping a number of agent/client pairs into the at least one priority tier according to a client rank of the client in an agent/client pair.

In some examples, agent/client pairs that are urgent agent/client pairs and agent/client pairs that are risky agent/client pairs is determined by: determining that an agent/client pair is an urgent agent/client pair responsive to the engagement capability parameter of the agent/client pair being within a first threshold and a second threshold; and determining that an agent/client pair is a risky agent/client pair responsive to the engagement capability parameter of the agent/client pair being below a risk threshold.

In various examples of inventive concepts, a value matrix of the at least one priority tier is derived based on the number of agents and the number of clients in the at least one priority tier, wherein the value matrix has a number of rows that is less than or equal to a number of agents that needs a decision and is less than or equal to the number of clients.

In some examples, deriving the value matrix includes enabling more than one agent to engage a client by adding a lower ranked row to the value matrix for the client.

In some examples, the each engagement option is a pair path from an agent/client pair in a top row of the value matrix to an agent/client pair in each intermediate row of the value matrix and to an agent/client pair in a bottom row of the value matrix wherein each agent and client in each agent/client in the pair path are different from other agents and clients in agent/client pairs of the pair path.

In various examples, the matrix value of each agent/client pair is a bottom row of the value matrix is set to a value of 1. The matrix value of each agent/client pair having successively higher client rank is set to a successively higher value by a power of 2^{N-1} where N is a number of a row in which the agent/client pair is located in the value matrix with the bottom row having a matrix value of 1.

In some examples of inventive concepts, decreasing the initial path value of the candidate pair path based on agent/client pairs in the high value pair path that are urgent agent/client pairs and based on agent/client pairs in the high value pair path that are risky agent/client pairs includes: for each agent/client pair in the candidate pair path that is an urgent agent/client pair, decreasing the initial path value of the candidate pair path by the matrix value of the urgent agent/client; and for each agent/client pair in the candidate path that is a risky agent/client pair, decreasing the initial path value of the candidate pair path by a risk value based on the engagement capability parameter of the risky agent/client pair.

In some examples, deriving the at least one engagement decision based on the best path includes responsive to the best path having an urgent agent/pair and the engagement capability of the urgent agent/pair is within a decision threshold or a time-to-go is within a time threshold, determining a first action for the agent in the urgent agent/client pair to perform; and responsive to agents in agent/client pairs in the best path not being urgent agent/client pairs, determining a second action for the agents in agent/client pairs in the best path to take wherein the second action to take for the agents in agent/client pairs in the best path is to stay the course. Transmitting the at least one engagement decision towards agents in the best path includes transmitting the first action towards the agent in the urgent agent/client pair responsive to determining the first action; and transmitting the second action to stay the course towards the agents in agent/client pairs in the best path that are not an urgent agent/client pair.

Apparatus and computer program product examples of inventive concepts incorporate any of the above examples and permutations of the above examples of inventive concepts.

### BRIEF DESCRIPTION OF THE DRAWINGS

The accompanying drawings, which are included to provide a further understanding of the disclosure and are incorporated in and constitute a part of this application, illustrate certain non-limiting examples of inventive concepts. In the drawings:
Figure 1 is a block diagram illustrating a MAEDS in a centralized coordinated agent system;
Figure 2 is a block diagram illustrating functions performed by a MAEDS according to some aspects of inventive concepts;
Figure 3 is a flow chart illustrating operations of a MAEDS according to some aspects of inventive concepts;
Figure 4a is a block diagram illustrating an example of a value matrix where all agent/client pairs are allowed according to some aspects of inventive concepts;
Figure 4b is a block diagram illustrating an example of a value matrix where some agent/client pairs are disallowed according to some aspects of inventive concepts;
Figure 4c is a block diagram illustrating an example of a value matrix where an agent has no clients to pair with according to some aspects of inventive concepts;
Figure 4d is a block diagram illustrating an example of a value matrix where there are more agents than clients according to some aspects of inventive concepts;
Figure 4e is a block diagram illustrating an example of a value matrix where there are more agents than clients to set up overloading agents to clients according to some aspects of inventive concepts;
Figure 4f is a block diagram illustrating an example of pair paths in a value matrix according to some aspects of inventive concepts;
Figure 5a is a block diagram illustrating an example of a value matrix where some agent/client pairs are disallowed according to some aspects of inventive concepts;
Figure 5b is a block diagram illustrating an example of engagement capability margin according to some aspects of inventive concepts;
Figure 6 is a block diagram illustrating a MAEDS according to some examples of inventive concepts;
Figures 7a and 7b are a flow chart illustrating operations of a MAEDS according to some aspects of inventive concepts; and
Figures 8-13 are flow charts illustrating various operations of a MAEDS according to further aspects of inventive concepts.

### DETAILED DESCRIPTION

Inventive concepts will now be described more fully hereinafter with reference to the accompanying drawings, in which examples of inventive concepts are shown. Inventive concepts may, however, be embodied in many different forms and should not be construed as limited to the examples set forth herein. Rather, these examples are provided so that this disclosure will be thorough and complete, and will fully convey the scope of present inventive concepts to those skilled in the art. It should also be noted that these examples are not mutually exclusive. Components from one example may be tacitly assumed to be present/used in another example.

The following description presents various examples of the disclosed subject matter. These examples are presented as teaching examples and are not to be construed as limiting the scope of the disclosed subject matter. For example, certain details of the described examples may be modified, omitted, or expanded upon without departing from the scope of the described subject matter.

As previously described, a MAEDS faces numerous challenges in multiple agent engagement decision making. These numerous challenges include difficulties in making multiple agent engagement decisions, difficulties in making timely coordinated multiple engagement decisions, difficulties in time and resource management to automatically adjust to new change drivers as the engagement evolves, and difficulties in avoiding hasty decisions that lead to waste of an agent's engagement capability and reduction of engagement options.

With respect to the difficulties in making multiple agent engagement decisions, these difficulties may include difficulties in sorting out overlapping regions of client engagement capability, in balancing agent resource limitations with capability to engage highest value clients, and in fully using all agents to serve as many high value customers as there are agents, providing one-on-one service. These are challenges that many businesses do not have since such businesses focus on one at a time single agent single client engagements.

With respect to the difficulties in making timely coordinated multiple engagement decisions, timely decisions become difficult to appropriate when agents' awareness of a client's value fluctuates over time, and there is incomplete information. The value fluctuation typically occurs due to a changing customer environment, awareness accuracy of these changes, and client value determination accuracies. In some instances, the customer environment may contain false information of client value, client group with sub-clients of different value, or service obstacles as the engagement evolves. Coordinated decisions are difficult when one at a time staggered engagement decisions are made against evolving customer need and location changes. Past decisions may preclude future engagement options.

With respect to difficulties in time and resource management to automatically adjust to new change drivers as the engagement evolves, the change drivers may include arrival of new clients, unexpected obstacles and client activities, and unexpected agent health status or resource capability. Managerial re-planning delays and resource scarcity limit the engagement adaptability to appearance of new change drivers. For a system with a pre-planned engagement plan, the re-planning effort may take days and may lag evolution of on-going events.

With respect to difficulties in avoiding hasty decisions that lead to waste of an agent's engagement capability and reduction of engagement options, such difficulties can lead to poor service. With multiple agents, more strategies and engagement options are available for the group as a whole to alleviate hasty decisions. A multiple agent multiple client engagement is not the same as a group of single agent single client engagements. Existing concepts that simply partitions the engagement space by agents lose the availability of the group engagement options and is susceptible to evolving engagement space boundary redefinition issues.

MAEDS approaches differ depending on how each system handles the difficulties described above. The difficulties in making multiple agent engagement decisions and in avoiding hasty decisions relate to agent information that is manageable with the MAEDS system described herein. The difficulties in making timely coordinated multiple engagement decisions and in time and resource management to automatically adjust to new change drivers as the engagement evolves are more difficult in that they involve uncertainty and impermanence for which the MAEDS system must accommodate and timeliness to not miss the engagement objective.

Centralized v. Distributive systems. There are two design approaches in the overall design of a MAEDS system. These two design approaches are a centralized system and a distributive system. A centralized MAEDS that coordinates engagement decisions for its agents has less design difficulties than a distributive coordinated engagement system. As S.Noh, and P. J. Gmytrasiewicz in Sanguk Noh, and Piotr J. Gmytrasiewicz, "Flexible Multi-Agent Decision Making Under Time Pressure," in IEEE Transactions on Systems, Man, and Cybernetics - Part A: Systems and Humans, Vol. 35, No. 5, Sept 2005, pp. 697-707 points out, if the agents are coordinated in a distributive fashion, each agent would make its decision based on its data and its assumptions about the data and actions of the other agents. A distributive engagement system would require pre-planned models and profiles, and increased computing resources to handle the hierarchal tree of assumption probabilities, which may be prohibitive sometimes in time pressured situations.

Managing Uncertainty. Uncertainty, impermanence, and incomplete data pose a particular challenge to making engagement decisions for multiple agents and clients. S. Hafenbrädl, D. Waeger, J. N. Marewski, and G. Gigerrenzer in Sebastian Hafenbrädl, Daniel Waeger, Julian N. Marewski, and Gerd Gigerrenzer, "Applied Decision Making With Fast-and-Frugal Heuristics" in Journal of Applied Research in Memory and Cognition 5, April 18, 2016, pp. 215-231 contends that "in situations of uncertainty, accurate decisions do not generally require high effort or complex strategies". They note that classical rational (RAT) approaches using Bayesian probabilities, complex modeling, cost estimation optimization, and sophisticated weighting algorithms such as those in described by E. Tiantaphyllou, B. Shu, S. N. Sanchez, and T. Ray in E. Tiantaphyllou, B. Shu, S. Nieto Sanchez, and T. Ray, "Multi-Criteria Decision Making: An Operations Research Approach", in Encyclopedia of Electrical and Electronics Engineering, Vol. 15, 1998, pp. 175-186 (Sum of weights, Multi-Attribute Decision Making issues), is suited for risk evaluation based on complete information, but not for applied decision making with incomplete information. The fast-and-frugal heuristic (FAFH) approach, which is based on simple rules and thresholds, measurable environment parameters, and decision maker capabilities, is much more suited for decision making intuition, speed, transparency, cost effectiveness, and robustness. The approach's building blocks consist of a search rule, a stopping rule, and a decision rule. M. D. Lee and T.D.R. Cummins in Michael D. Lee and Tarrant D.R. Cummins, "Evidence accumulation in decision making: Unifying the "take the best" and the "rational" models," in Psychonomic Bulletin & Review, 2004, 11(2), pp. 343-352 points out that one such FAFH, known as the Take the Best (TTB) decision model "often match or outperforms competing rational models for decision accuracy when tested in real-world domains and do so more quickly and with few cognitive resources". These are attributes a real-time autonomous MAEDS needs to incorporate.

Another aspect of managing client environment uncertainty and impermanence is to ensure frequent information updates and use a short history in its decision making. A. Veliz-Cuba, Z. P. Kilpatrick, and K. Josic in Alan Veliz-Cuba, Zachary P. Kilpatrick, and Krešimir Josic, "Stochastic Models of Evidence Accumulation In Changing Environments," in SIAM Review, Vol. 58, May 2005 points out that in an uncertain and impermanent environment, "an ideal observer discount prior evidence at a rate determined by the volatility of the environment, and the dynamics of evidence accumulation is governed by the information gained over an average environmental epoch". Frequent updates and short reliance of past client environment history help to adapt to a dynamic environment.

Adapting Strategy to Environment. M. D. Lee and T.D.R. Cummins in Michael D. Lee and Tarrant D.R. Cummins, "Evidence accumulation in decision making: Unifying the "take the best" and the "rational" models," in Psychonomic Bulletin & Review, 2004, 11(2), pp. 343-352 views TTB and RAT approaches as two ends of a sequential-sampling decision making process that varies according to the different threshold levels of evidence required for decision making. The threshold levels used for terminating evidence accumulation can be varied to accommodate engagement environment and MAEDS objective.

Accumulate Strong Evidence to Make a Decision. D. Hausmann and D. Läge in Daniel Hausmann and Damian Läge, "Sequential evidence accumulation in decision making: The individual desired level of confidence can explain the extent of information acquisition," in Judgment and Decision Making, Vol. 3, No. 3, March 2008, pp. 229-243 suggests that a stopping point for accumulating enough evidence to make a decision is associated with the "desired level of confidence". In a dynamic engagement environment, a hard stopping point can never be achieved due to having incomplete information. Fortunately, client engagements typically involve agent/client proximity, and so the agents' awareness of clients, their relative location and activity, and client value determination ability improve with proximity and time, thereby adding confidence to making decisions. Prolonging decision making in a dynamic engagement environment leads to better information and better decisions.

Urgency and Timeliness. P. Cisek, G. A. Puskas, and S. El-Murr in Paul Cisek, Geneviève Aude Puskas, and Stephany El-Murr, " Decisions in Changing Conditions: The Urgency-Gating Model," in The Journal of Neuroscience, Sept 16, 2009, 29-(37) pp. 11560 - 11571 contends that besides the strength of the accumulated evidence, the urgency to make a choice also contributes to turning decisions to actions. In a changing engagement environment, this point is where diminishing agent resources and increasing time pressure to act intersect. The former is related to an agent's engagement capability, the latter is related to client activity changes and client value. A MAEDS' timeliness is in its response to urgent events.

Described herein below is a real-time MAEDS that provides timely coordinated simultaneous engagement decisions that lead to agent energy saving, engagement of as many high value clients as agents, ensure favoring highest value clients, flexible engagement changes adapting to evolution of client value, engagement opportunity, resource limitations, impact of past service decisions, agent and client activities and status, and engagement urgency.

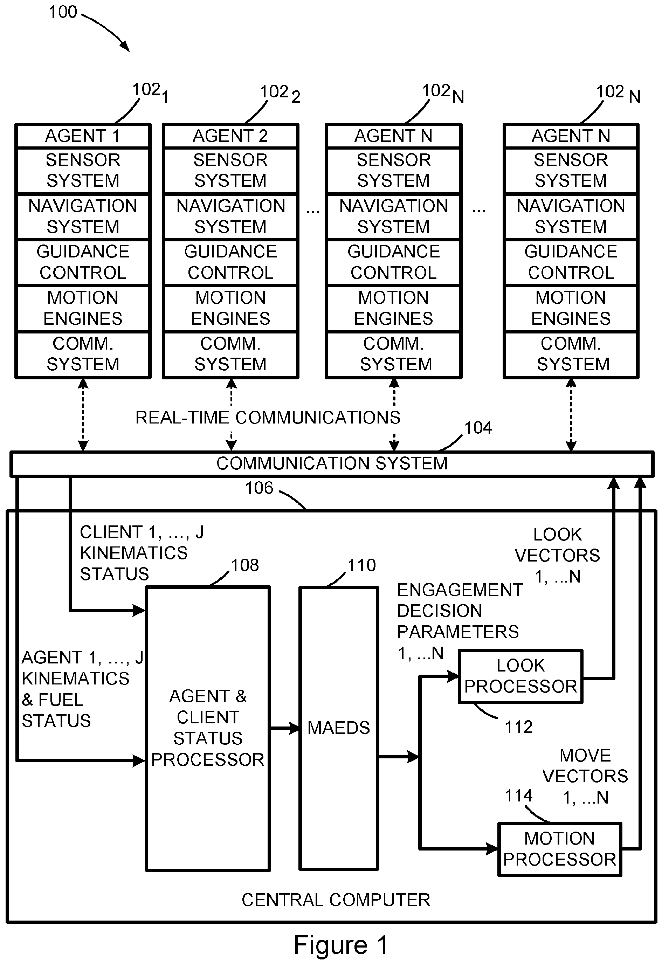

Figure 1 illustrates an aspect of a MAEDS 110 in a centralized coordinated agent system 100 where agents 1021 to 102_{N} (collectively agents 102) communicate in real-time to central computer 106 via communication system 104. Each agent 102 has a sensor system, a navigation system, guidance control, motion engines, and a communication system. The agents 102 and clients locations, activities, and statuses are made known to an agent and client status processor 108 of the central computer 106 via the communication system 104. The central computer 106 determines client value at each instance in time and provides a descending rank ordered list of clients to the MAEDS 110. The central computer 106 can be hosted externally or on one of the agents 102.

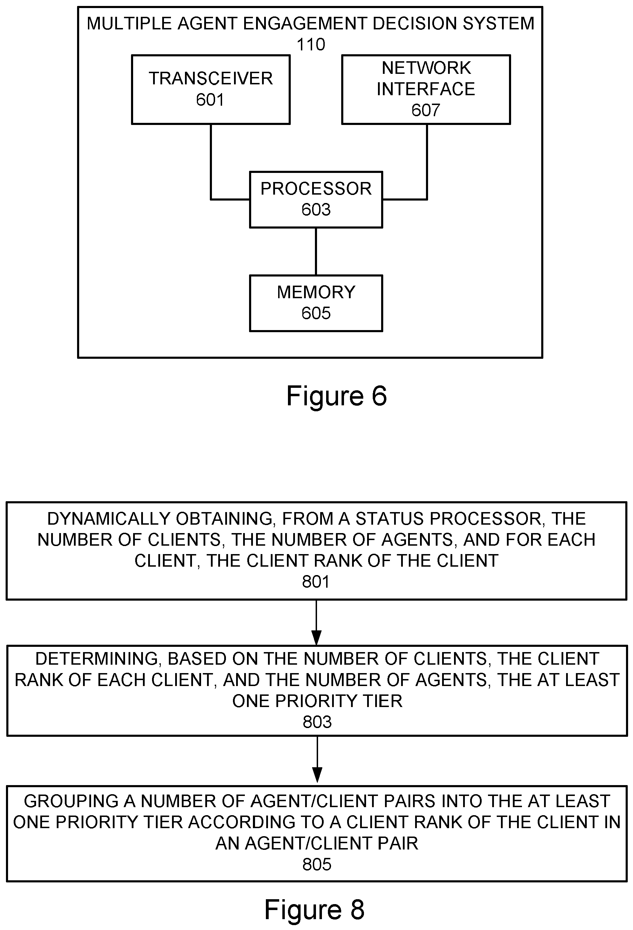

Figure 6 is a block diagram illustrating elements of a multiple agent engagement decision system (MAEDS) 110 configured to provide engagement decisions according to some aspects of inventive concepts. As shown, MAEDS 110 may include a network interface 607 and transceiver circuitry 601 including a transmitter and a receiver configured to provide uplink and downlink radio communications with agents of a network. MAEDS 110 may also include processing circuitry 603 (also referred to as a processor) coupled to the transceiver circuitry and memory circuitry 605 (also referred to as memory) coupled to the processing circuitry. The memory circuitry 605 may include computer readable program code that when executed by the processing circuitry 603 causes the processing circuitry to perform operations according to examples disclosed herein. According to other examples, processing circuitry 603 may be defined to include memory so that separate memory circuitry is not required. MAEDS 110 may also include an interface (such as a user interface) coupled with processing circuitry 603, and/or MAEDS 110 may be incorporated in a vehicle.

As discussed herein, operations of MAEDS 110 may be performed by processing circuitry 603 and/or transceiver circuitry 601. For example, processing circuitry 603 may control transceiver circuitry 601 to transmit communications through transceiver circuitry 601 over a radio interface to an agent 102 and/or to receive communications through transceiver circuitry 601 from an agent 102 via communications system 104. Moreover, modules may be stored in memory circuitry 605, and these modules may provide instructions so that when instructions of a module are executed by processing circuitry 603, processing circuitry 603 performs respective operations.

Returning to Figure 1, an agent 102 is capable of determining its own location, move, and communicate information to the central computer 106. The agent 102 can monitor the client environment. A "client" is a valued customer. This client requires the entire attention of the agent 102 and in some examples, the agent may not service any other clients afterwards. For a client group, each member is designated as a valued client. An agent's task includes getting data on client value and need, and informing the MAEDS 110 via the agent and client status processor 108.

The MAEDS 110 outputs engagement decision parameters that are used by look processor 112 and motion processor 114. The look processor 112 receives the engagement decision parameters and provides a look vector for each of the agents 102 via communication system 104. The motion processor 114 receives the engagement decision parameters and provides a move vector for each of the agents 102 via communications system 104. The agent 102 receives the look vector and move vector and updates the guidance control based on the look vector and move vector and controls the motion engine accordingly.

The MAEDS 110 works with multiple agents 102. In the description that follows, a MAEDS engagement option as a possible set of agent/client pairings for an engagement. A MAEDS engagement decision refers to the engagement action plan after selection of the best engagement option and review of the required action.

An advantage that may be realized using the MAEDS 110 is the real-time novel aspects of the MAEDS 110 makes decisions autonomously based on up to date agent and client activities and status. The MAEDS 110 does not require pre-planning and makes no assumptions about the number of clients in the environment or the number of healthy agents. The real-time approach allows for engagement decision revisits, thereby providing flexible engagement decisions to accommodate evolutions in the service scenario.

Another advantage that may be realized is that the engagement decision process novel aspects that uses a prioritized client "tier" approach. By using the tier approach starting with the first tier, the MAEDS 110 ensures that, if possible, engagement decisions are made for the highest ranked clients.

Another advantage of using the MAEDS 110 is that the novel engagement selection criterion is based on "Urgency" and "risk." Thus, the allowance, timeliness, and risk of making engagement decisions can be based on the MAEDS engagement strategy and the agents' capability to complete the engagement against clients in the Tier being analyzed.

Another advantage that may be realized is that the novel engagement option evaluation that relies on the conversion of client value rank into a power of 2 integer value matrix. Unlike conventional weighting schemes that tie weight value proportionally to client values, the MAEDS 110 focus is on relative value (rank), not on absolute value. In a fluctuating client value environment, client rank is more stable and provides more stable outcomes by minimizing dependency on absolute client values.

Other advantages that may be realized is MAEDS solves for multiple agent/client pair solution simultaneously, thus avoiding engagement option preclusion from prior sequential customer engagement decisions or agent-to-client cluster region commitments. The evaluation of engagement options for all possible agent/client pairs favors high ranking client values with adjustments based on agent/client pair engagement capability, urgency, and risk to successful service completion.

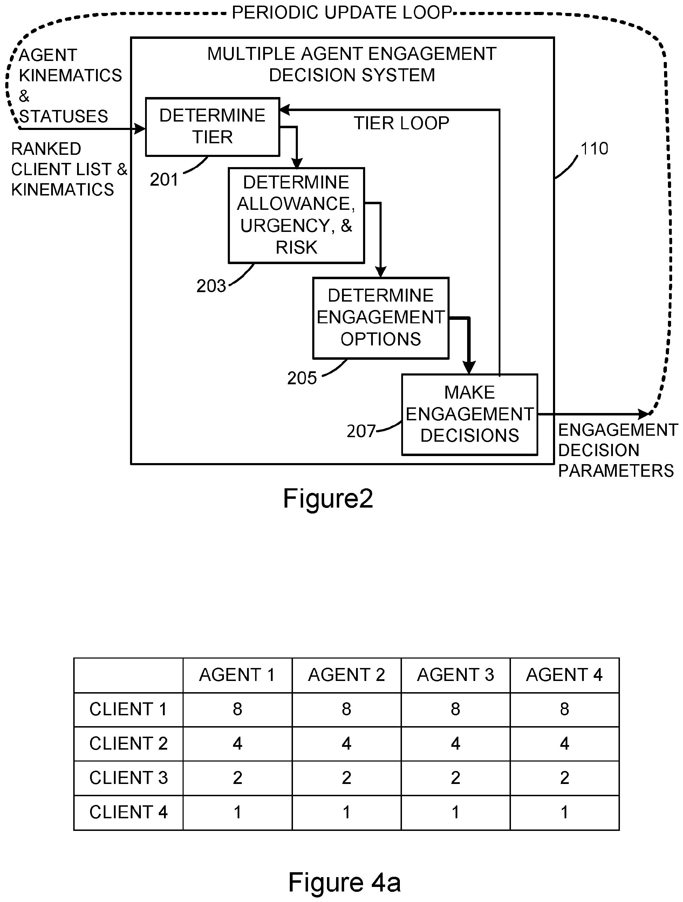

Turning to Figure 2, a high-level overview of the MAEDS functions is illustrated. The MAEDS 110 receives agent kinematics and statuses for each agent and a ranked client list of clients and kinematics of each client. In block 201, the MAEDS 110 determines tiers. In block 203, the MAEDS 110 determines allowance, urgency, and risk. In block 205, the MAEDS determines engagement options. In block 207, the MAEDS 110 make engagement decisions and transmits engagement parameters to agents. The MAEDS repeats blocks 201, 203, 205, and 207 for each tier. The central computer 106 periodically updates the agent kinematics and statuses for each agent and a ranked client list of clients and kinematics of each client. The MAEDS 110 repeats blocks 201, 203, 205, and 207 for each update.

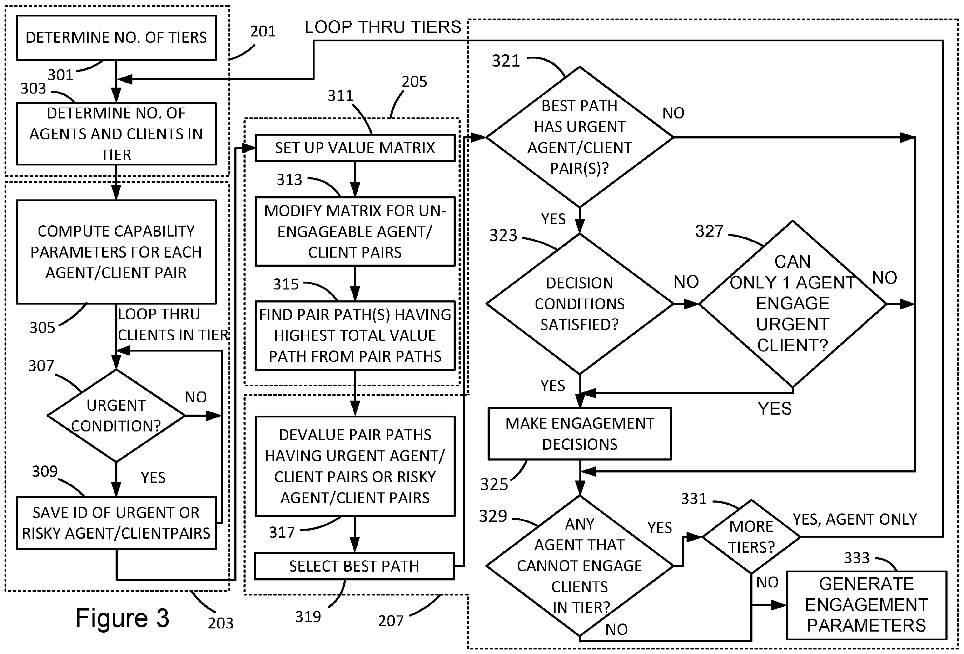

Turning to Figure 3, further details of the MAEDS process flow of Figure 2 is illustrated. In block 301, the MAEDS process begins with determining the number of tiers. The number of tiers may be determined by partitioning the list of ranked clients into tiers based on the number of agents requiring engagement decisions. In block 303, the MAEDS determines the number of agents and clients in a tier being analyzed.

The clients are grouped into "tiers" based on client value rank only, with the number of clients in each tier equal to the number of agents requiring decisions. The first tier consists of the highest ranked clients, followed by the second tier of next highest ranked clients, and so on. The last tier contains the remaining clients, which may or may not equal the number of agents requiring decisions. In this way, by working the clients list starting with the first tier, the MAEDS 110 ensures that, if possible, engagement decisions are made for the highest ranked clients. If not, then engagement decisions are made for the next tier of clients. This ensures that to the best the MAEDS 110 can do, all agents are expended to engage clients.

The tier feature easily allows for engagement overload options if there is a desire to have more than one agent engage and service a client. Typically this strategy is used when there are more agents than clients. In this feature, using tiers allow for some overload decisions to be made without adding more MAEDS decision complexity on which agent should be selected. Since there are more agents than clients in the tier, there is only one tier. The MAEDS 110 take the clients in the tier that are to be overloaded and appends these clients to the end of the clients list in the tier, thus virtually having more clients for agents to match with. The rest of the MAEDS processing easily accommodate this strategy, and the best overload engagement option and decision is timely determined.

In block 305, the MAEDS 110 computes engagement capability parameters for each agent/client pair. The allowance, timeliness, and risk of making engagement decisions is based on the MAEDS engagement strategy and the agents' capability to complete the engagement against clients in the tier.

Agent engagement availability margin and time to go to complete service margin are typical engagement capability parameters used to determine the allowance, timeliness, and risk for each agent/client pairing in the tier. Proximity to client margin is sometimes used. The choice of engagement capability parameters depends on the engagement objective.

An agent/client pair is "allowed" in the engagement option consideration when its engagement capability margin is positive. Otherwise it is "disallowed."

In block 307, the MAEDS 110 determines whether there are urgent agent/client pairs in the tier and risky agent/client pairs in the tier. In block 309, the MAEDS 110 saves an identification (ID) of urgent agent/client pairs and risky agent/client pairs. An urgency criteria is set up to establish when an agent/client pair's engagement capability is "urgent." If the engagement capability margin is within a window of an upper and lower threshold criterion, then the agent/client pair is declared "urgent." Current and next time engagement capability margins are checked to ensure the timeliness of the urgency declaration. As described below, the urgency of an agent/client pair is used to adjust the value of engagement options.

In some aspects, the urgency criteria design is subject to the MAEDS strategy used. The MAEDS strategy may differ depending on whether agents are finished after one engagement or must continue with other engagements. The urgency criteria is usable to accommodate strategy differences.

Even if an agent/client pair is allowed and urgent, the engagement capability margin of the agent/client pair may still be more risky than other agent/client pairs in the same tier. This is considered in the light of possible dynamic events in the future, such as fluctuating client values, unexpected client activities, unexpected agent health status, in which a low engagement capability margin may not be able to support completing the service. An agent/client pair is given a non-zero risk level if its engagement capability margin falls below an acceptable threshold. The risk level in one aspect is represented by a fractional risk value between 0 and 1 that is proportional to the lack of desired minimum engagement capability margin. The risk value design is subject to the MAEDS engagement strategy, agent type, and engagement capability used. Thus, other risk level values may be used.

Table 1 summarizes allowance, urgency, and risk level determination.

**Table 1**

| Allowance, Urgency, Risk Summary | | | |
|---|---|---|---|
| **Engagement Capability Margin, EM** | **Determine Allowance** | **Determine Urgency** | **Determine Risk** |
| EM ≥ EM_U | Allowed | Not Urgent | Not Risky |
| EM_L<EM<EM_U | Allowed | Urgent | Not Risky |
| 0<EM≤EM_L | Allowed | Urgent | Risky. Determine Risk Value |
| EM≤0 | Disallowed | NA | NA |
| Legend: EM_U is upper threshold, EM_L is lower threshold | | | |

A MAEDS engagement option is a possible set of agent/client pairings for an engagement. MAEDS engagement options are established within a tier for agents that require engagement decisions. If in one tier there are remaining agents that need an engagement decision, then these agents are carried over to be used on the next tier of clients, if any.

In some aspects of inventive concepts, client rank is converted into a power of 2 integer value in a value matrix where the value matrix is used in determining engagement options. Unlike conventional weighting schemes that tie weight value proportionally to client values. The MAEDS focus is on relative value (rank), not on absolute value. In a fluctuating client value environment, client rank is more stable and provides more stable outcomes by minimizing dependency on absolute client values.

In converting client rank into a power of 2 integer value, the lowest rank client in the tier gets a 1 value. With each higher rank client, the value is increased by the next power of 2. Thus, the client ranks for 4 client rankings in a value matrix becomes 1, 2, 4, and 8.

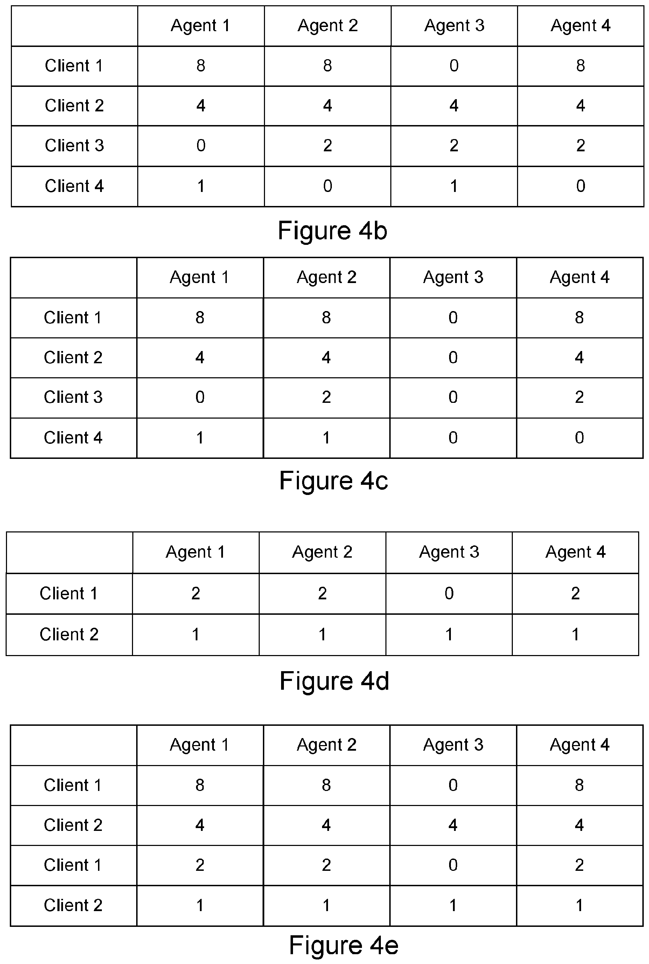

In block 311, the MAEDS 110 sets up a value matrix for the tier. In block 313, the MAEDS 110 modifies the value matrix for un-engageable agent/client pairs. An example value matrix for 4 agents and 4 clients in a tier is shown in Figures 4a and 4b. Figure 4a illustrates an example value matrix where all agent/client pairs are allowed. Figure 4b illustrates an example value matrix where four agent client pairs (A1C3, A2C4, A3C1, and A4C4) are disallowed.

In block 305, the engagement capability parameters were computed for each agent/client pair. The agent/client pair engagement capability margin is used to determine agent/client pair allowance. If the capability margin is above a minimum threshold, it is allowed, otherwise it is disallowed. An allowed pair retains its value in the value matrix. A disallowed pair gets a value of 0 in the matrix. In one aspect, only clients that have at least one allowed agent/client pair are used in the value matrix.

In the course of an engagement, there may be instances where within a tier, an agent has no allowable clients to pair with. A value matrix example for this case is shown in Figure 4c where agent 3 has no clients to pair with. In the example for Figure 4c, agent 3 would be retained for use with the next tier of clients, if any. If there are no more clients, then agent 3 uses the default decision, which is to have no change in its course and keep monitoring for engagement opportunities.

An example of more agents to clients is depicted in Figure 4d. In this example, there are 4 agents that need engagement decisions, but only 2 clients. In Figure 4d, there is only one tier for establishing engagement options.

The value matrix of Figure 4d can be evaluated as is or adjusted to achieve overloading of agents to client prior to evaluation.

The set up for overloading agents to clients is depicted in Figure 4e where the third and fourth rows of the value matrix are made to correspond to the data of the two clients, but have values associated with being clients in the third and fourth rank in the Tier. The original two clients get higher power of 2 values now that there are essentially four clients.

Caution should be used for overloading cases as overloading means a possible commitment of more resources to engage the same client. In a dynamically changing client value environment, risk of overloading agents to clients too early can be reduced by either delaying overloading until there is certainty of the number of clients in the scene, or by not fully overloading agents to clients (e.g., only repeat client 1 in third row rather than repeating both clients).

The MAEDS 110 solves for the multiple agent/client pair solution simultaneously, thus avoiding engagement option preclusion from prior sequential customer engagement decisions or agent-to-client cluster region commitments. Engagement options are evaluated using all allowable agent/client pair combinations, thereby making a coordinated solution and solving the difficulties in sorting out overlapping regions of client engagement capability.

Evaluation of all possible engagement options is done with a Greedy Knapsack algorithm (∼O: N log N in computational load). Use of integer values in the value matrix minimizes the computational load. Each engagement option is a path from top to bottom of the value matrix and consists of a group of distinct agent/client pairs. An agent cannot be paired with more than one client, and (except in an overload case) a client cannot be paired with more than one agent. The path value (PV) is the summation of the values of the allowable agent/client pairs involved in the engagement option.

One advantage of the aspect described above of converting client rank to power of 2 values, is the PV uniquely reveals the clients that are involved in the engagement option (due to unique binary properties of power of 2). This nicely bounds the PV to integer values with a known upper and lower bound.

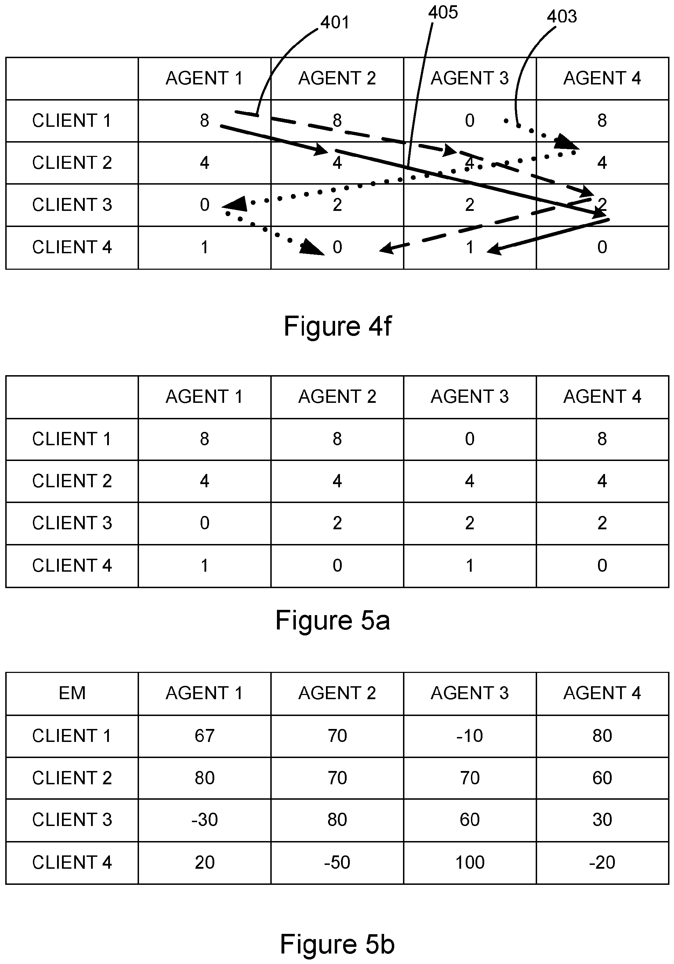

Figure 4f illustrates three example pair paths in the value matrix using the matrix from Figure 4b. Thus, three engagement options are illustrated. Path 401 (striped arrows) indicates agent/client pairs A1C1, A3C2, A4C3, and A2C4. Path 403 (dotted arrows) indicates agent/client pairs A3C1, A4C2, A1C3, and A2C4. Path 405 (solid arrows) indicates agent/client pairs A1C1, A2C2, A4C3, and A3C4. The initial PV for path 401 is 8+4+2+0=14. The initial PV for path 403 is 0+4+0+0=4. The initial PV for path 405 is 8+4+2+1=15.

In the event of multiple Tiers with agents carried over to the next Tier, it is possible that a client row only has disallowed value entries. A Skip Client indication is used to reflect this condition. In a Skip Client condition, the agent is free to skip the client from engagement option consideration. A matrix value of 0 is used for agents paired with that client.

Returning to Figure 3, in block 315, the MAEDS 110 finds the pair path(s) having the initial highest total value path of the pair paths. There can be more than one pair path with the highest total value pair path. For example, in Figure 4f, the pair paths having the initial highest total value pair path are pair paths having a path value of 15. These pair paths are pair paths having the following agent/client pairs:
A1C1, A2C2, A4C3, A3C4
A1C1, A3C3, A2C3, A3C4
A2C1, A1C2, A4C3, A3C4
A2C1, A3C2, A4C3, A1C4
A2C1, A4C2, A3C3, A1C4
A4C1, A1C2, A2C3, A3C4
A4C1, A2C2, A3C3, A1C4
A4C1, A3C2, A2C3, A1C4
summary of the operations the MAEDS performs to find all paths that have the highest initial point value are:
1. Set up Value Matrix for the Tier using a power of two value representation.
2. Set matrix element to 0 for any agent/client pair that are disallowed.
3. Adjust for overloading agents to clients, if desired and is possible.
4. Make a list of agents that has all disallowed clients in the Tier. The agents are retained for use on clients in the next Tier, if any.
5. Perform Greedy Knapsack on the Value Matrix
   a. For each agent, find a client to match. Allow for the possibility that a client does not have an allowable agent to match. When that happens, indicate it as a Skip Client.
   b. Number each possible path
   c. Compute the Path Value (PV) by summing the values of the matrix elements in the path.
   d. Rank the paths by PV.
   e. Find all paths that has the same highest PV.

The pair paths having the highest initial PV are denoted as candidate pair paths. When multiple candidate paths have the same highest PV (such as the example of Figure 4f), the urgency of an agent/client pair's engagement capability is used to refine the down-select to the best candidate path for an engagement decision.

The urgency condition of an agent/client pair can be used to ensure that engagement decisions are not hastily made by devaluing the PV of candidate pair path when there are urgent agent/client pairs in the candidate pair path. If a candidate pair path has an agent/client pair that is not urgent, the default decision is for the agent in the agent/client pair to stay on course without any action. Even if the pair is urgent, if there are other candidate pair paths that do not include that pair, then it is not urgent for the MAEDS engagement decision. The down-selection favors the path that do not have urgent pairs. This avoids having individual pair urgency hastily drive engagement decisions.

Further decreases to the PV value is done for any candidate paths that has lower engagement capability than a desired minimum. This reflects the riskiness of that candidate path in completing the engagement in light of possible future fluctuation of client need or unexpected changes. The risk value in one example is a fractional number from 0 to 1.

In block 317, the MAEDS 110 devalues pair paths having urgent agent/client pairs and/or risky agent/client pairs. In block 319, the best path is selected. The devaluation process ensures that the highest PV candidate path after devaluation, denoted the best path, has agents with the highest likelihood of adequate resources to complete the service to the client. In the event of a tie, the first initial highest PV candidate path is the best path.

In block 321, the MAEDS 110 determines if the best path has an urgent agent/client pair. When the best path contains an urgent agent/client pair, then an engagement decision has to be made for that agent to take action, otherwise the decision defaults to staying on course and take no action. This feature saves agent resources to engage a wider variety of scenario evolutions in the course of service. Thus, if decision conditions are satisfied in block 323, engagement decisions are made in block 325.

If decision conditions are not satisfied in block 323, the MAEDS 110 determines if only one agent can engage the urgent client in block 327. If there is only one agent that can engage the urgent client in block 327, then engagement decisions are made in block 325.

If there are no urgent agent/client pairs in the best path or when the MAEDS 110 makes engagement decisions, the MAEDS 110 proceeds to block 329. The MAEDS 110 also proceeds to block 329 when decision conditions are not satisfied in block 323 and more than one agent can engage the urgent client.

In block 329, the MAEDS 110 determines if there are any agent that cannot engage clients in the tier. If there are not any agents that cannot engage clients in the tier, then the MAEDS 110 generates engagement parameters in block 333. The MAEDS 110 also generates engagement parameters if there are no more tiers to analyze as determined in block 331. If there are agents that that cannot engage clients in the tier and there are more tiers as determined in block 331, the MAEDS proceeds to analyzing the next tier and repeats blocks 303 to 333 for each tier.

If there are more agents that need decisions, those agents are used for clients in the next Tier. This ensures that each agent has the chance to engage the highest possible client need in the client need list. It ensures that all agents are fully used, even in the event when for an agent/client pair, fluctuating client value rank changes have caused a previously high rank client to drop in rank, and the MAEDS has previously made decisions for the agent to engage that client.

A summary of operations the MAEDS performs to find generate decision parameters to transmit to agents are:
1. For all paths that has the same highest value, denote them as Candidate Paths.
   a. Modify Candidate Path values
      i. Any Candidate Path that also has urgent agent/client pairs is decreased in PV by the client's power of 2 value in the Value Matrix.
      ii. The PV of Candidate Path is decreased by the Risk Value.
   c. Find the Best path. Best path is first one with the highest adjusted PV.
2. Make decisions
   a. If the Best path contains urgency pairs, and if the number of agents exceeds 1, or the number of agents equals 1 and the engagement capability is within a decision threshold, or the time-to-go to complete the service is within a time threshold, then make a decision for the agent in the urgency pair to act.
   b. Determine the appropriate action for the agent in the urgency pair. The action depends on the type of engagement agent. Typically, this involves the agent to move or take on an engagement action.
   c. The decision for agents in the Best path that are not urgent is to stay on course without any action.
3. Repeat the above for next Tier if there are remaining agents that need a decision that cannot engage any clients in the Tier.
4. Generate decision parameters for output to the agents.

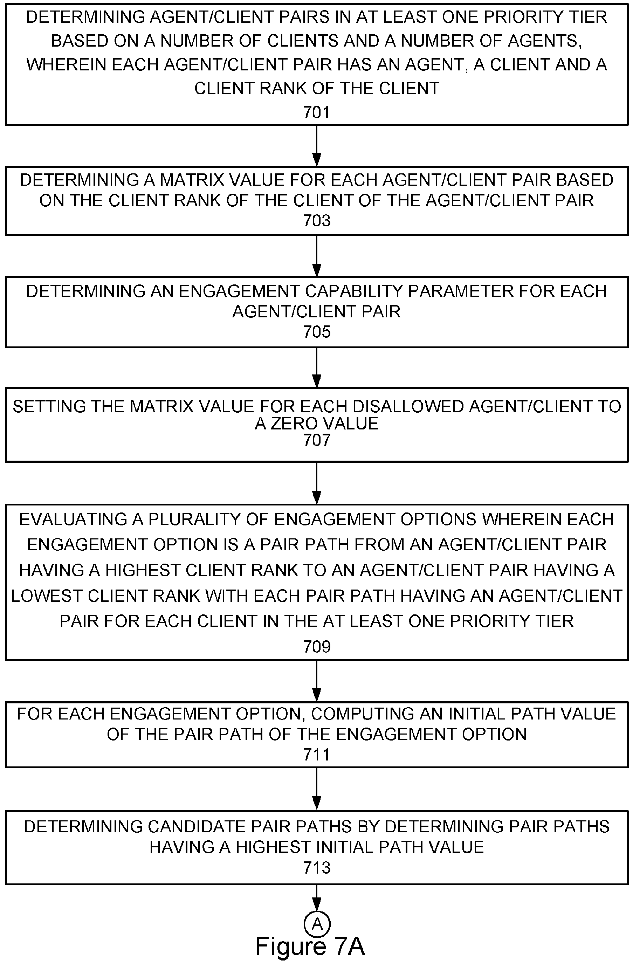

Now that the overall operations of the MAEDS have been described, an example of the operations the MAEDS 110 performs shall now be described. Operations of the MAEDS 110 (implemented using the structure of the block diagram of Figure 6) will now be discussed with reference to the flow chart of Figures 7a to 7b according to some aspects of inventive concepts. For example, modules may be stored in memory 605 of Figure 6, and these modules may provide instructions so that when the instructions of a module are executed by respective MAEDS processing circuitry 603, processing circuitry 603 performs respective operations of the flow chart.

Turning now to Figure 7a, in block 701, the processing circuitry 603 determines agent/client pairs in at least one priority tier based on a number of clients and a number of agents, wherein each agent/client pair has an agent, a client, and a client rank of the client.

Figure 8 illustrates aspect of determining the agent/client pairs. In block 801, the processing circuitry 603 dynamically obtains, from a status processor, the number of clients, the number of agents, and for each client, the client rank of the client. For example, with respect to Figure 1, the processing circuitry 603 dynamically obtains, from the agent and client status processor 108, the number of clients, the number of agents, and for each client, the client rank of the client.

In block 803, the processing circuitry 603 determines, based on the number of clients, the client rank of each client, and the number of agents, the at least one priority tier. In block 805, the processing circuitry 603 groups a number of agent/client pairs into the at least one priority tier according to a client rank of the client in an agent/client pair.

Returning to Figure 7a, in block 703, the processing circuitry 603 determines a matrix value for each agent/client pair based on the client rank of the client of the agent/client pair. Figure 5a illustrates an example of a matrix value for each agent/client pair based on the client rank of the client of the agent/client pair. The value matrix is the example from Figure 4b.

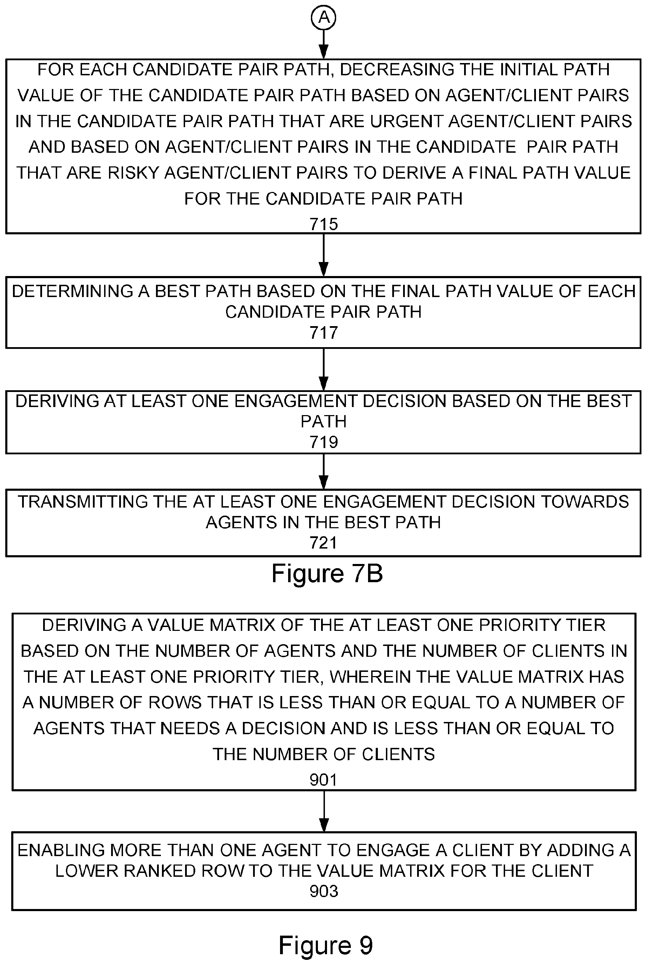

Turning to Figure 9, the processing circuitry 603 in block 901 may derive a value matrix of the at least one priority tier based on the number of agents and the number of clients in the at least one priority tier, wherein the value matrix has a number of rows that is less than or equal to a number of agents that needs a decision and is less than or equal to the number of clients. In block 903, the processing circuitry 603 enables more than one agent to engage a client by adding a lower ranked row to the value matrix for the client.

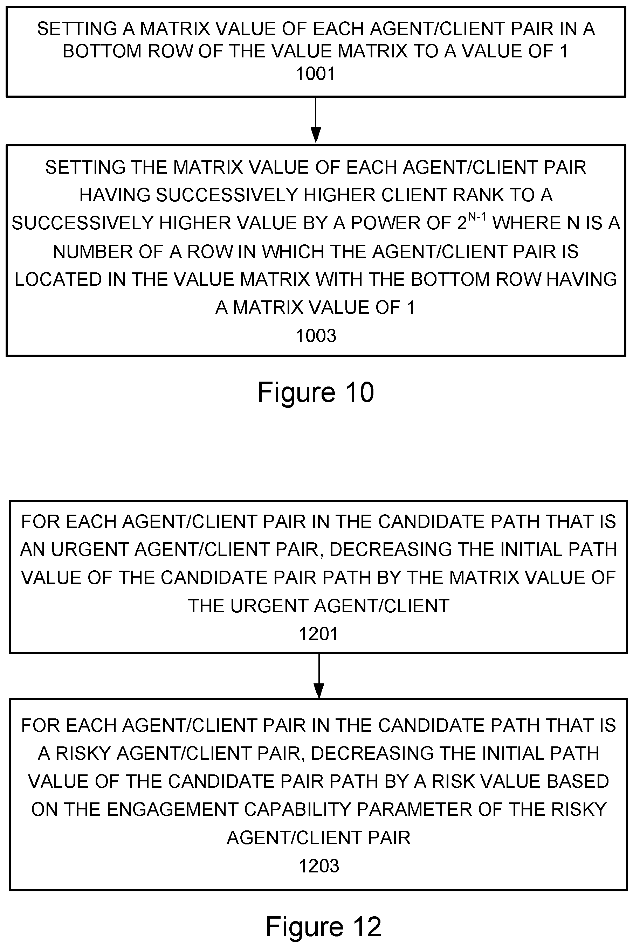

Turning to Figure 10, when the value matrix uses the power of 2, the processing circuitry 603 in block 1001 sets a matrix value of each agent/client pair in a bottom row of the value matrix to a value of 1. The processing circuitry 603 in block 1003 sets the matrix value of each agent/client pair having successively higher client rank to a successively higher value by a power of 2^{N-1} where N is a number of a row in which the agent/client pair is located in the value matrix with the bottom row having a matrix value of 1.

Returning to Figure 7a, in block 705, the processing circuitry 603 determines an engagement capability parameter for each agent/client pair. For example, let the time-to-go for completion of service for all agent/client pairs be sufficiently positive to not be a factor in affecting urgency. Let *E* be the engagement capability of an agent/client pair. *E* in this example is associated with an agent's energy. EM indicates the amount of energy margin to complete the service. An example of an engagement capability margin is illustrated in Figure 5b.

In block 707, the processing circuitry 603 sets the matrix value for each disallowed agent/client to a zero value, wherein a disallowed agent/client pair has an engagement capability margin that is below a defined threshold. For example, the defined threshold may be zero. In other words, the engagement capability margin must be a positive value. Thus, the matrix value for each agent/client pairs having a negative value is set to zero. In Figure 5b, the engagement capability margin for agent/client pairs A1C3, A2C4, A3C1, and A4C4 are negative values. Thus, the matrix value of agent/client pairs A1C3, A2C4, A3C1, and A4C4 are set to zero as illustrated in Figure 5a.

In block 709, the processing circuitry 603 evaluates a plurality of engagement options wherein each engagement option is a pair path from an agent/client pair having a highest client rank to an agent/client pair having a lowest client rank with each pair path having an agent/client pair for each client in the at least one priority tier. Figure 4f illustrates three pair paths. In the example value matrix of Figure 5a, each engagement option is a pair path from an agent/client pair in a top row of the value matrix to an agent/client pair in each intermediate row of the value matrix and to an agent/client pair in a bottom row of the value matrix wherein each agent and client in each agent/client in the pair path are different from other agents and clients in agent/client pairs of the pair path.

In block 711, the processing circuitry 603, for each engagement option, computes an initial path value of the pair path of the engagement option. An example of computing the initial path value for three of the pair paths was described above in the description of Figure 4f.

In block 713, the processing circuitry 603 determines candidate pair paths by determining pair paths having a highest initial path value, wherein the pair paths having the highest initial path value are candidate pair paths. In the example value matrix of Figure 5a, the highest initial path value is a value of 15. There can be numerous pair paths having the highest initial path values.

Referring to figure 7B, in block 715, the processing circuitry 603, for each candidate pair path, decreases the initial path value of the candidate pair path based on agent/client pairs in the candidate pair path that are urgent agent/client pairs and based on agent/client pairs in the candidate pair path that are risky agent/client pairs to derive a final path value for each candidate pair path.

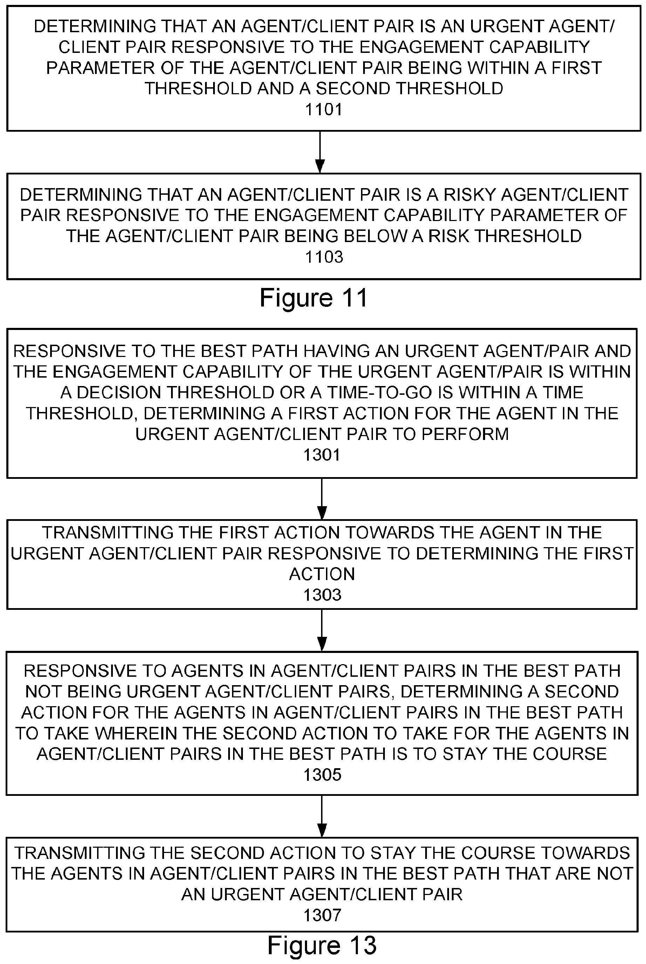

Turning to Figure 11, the processing circuitry 603 in block 1001 determines agent/client pairs that are urgent agent/client pairs and agent/client pairs that are risky agent/client pairs by determining in block 1101 that an agent/client pair is an urgent agent/client pair responsive to the engagement capability parameter of the agent/client pair being within a first threshold and a second threshold and by determining in block 1103 that that an agent/client pair is a risky agent/client pair responsive to the engagement capability parameter of the agent/client pair being below a risk threshold.

For example, with respect to Figure 5a, the first threshold may be zero and the second threshold may be 65. The risky agent/client pairs are set to be any agent/client pair with an engagement capability margin being below a risk threshold of 35. Thus, any agent/client pair in Figure 5a that has an engagement capability margin below 65 (i.e.., between 0 and 65) is an urgent agent/client pair and any agent/client pair that has an engagement capability margin below 36 is a risky agent/client pair. In the example, since the risk threshold is between the first threshold and the second threshold a risky agent/client pair is also an urgent agent/client pair. In Figure 5a, the urgent agent/client pairs are A4C2, A3C3, A4C3, and A1C4 agent/client pairs. The risk agent/client pairs are A1C4 and A4C3 agent/client pairs.

Turning to Figure 12, for each agent/client pair in the candidate pair path that is an urgent agent/client pair, the processing circuitry in block 1201 decreases the initial path value of the high value pair path by the matrix value of the urgent agent/client. In block 1203, the processing circuitry 603, for each agent/client pair in the candidate path that is a risky agent/client pair, decreasing the initial path value of the candidate pair path by a risk value based on the engagement capability parameter of the risky agent/client pair.

In the example of Figure 5a, a risk value that is a fractional value is defined by Table 2.

**Table 2**

| Risk Value Example | |
|---|---|
| EM | Risk Value |
| 0<EM≤7 | 1 |
| 7<EM≤14 | 0.8 |
| 14<EM≤21 | 0.6 |
| 21<EM≤28 | 0.4 |
| 28<EM≤35 | 0.2 |

For this example, suppose the expected decrease in EM is 1 for all agent/client pairs from one MAEDS cycle to the next. Hence, the allowance, urgency, and risk of any engagement option is not expected to change within a MAEDS cycle.

The engagement option paths with corresponding agent/client pairs, initial PV, Urgency Devaluing, and Risk Value are shown in Table 3. Highlighted in shaded background are the urgent agent/client pairs, and in vertical stripes are the urgent and risky agent/client pairs.

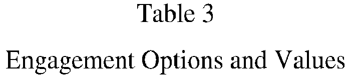

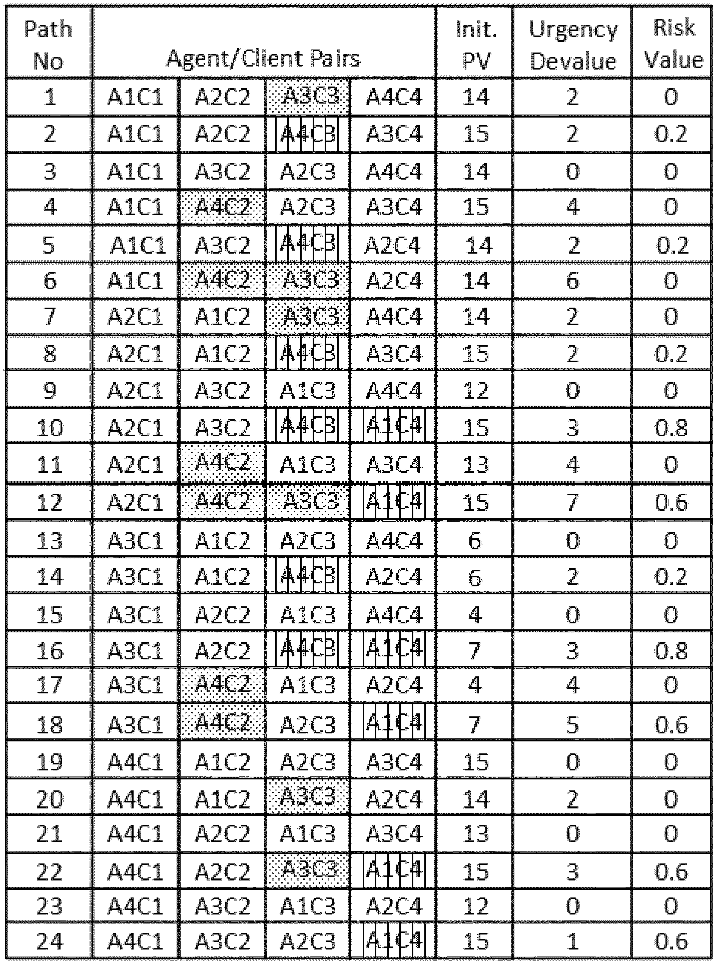

A sort on Initial PV results in paths that have the highest PV at 15. These are the Candidate Paths shown in Table 4. Also in table 4 is the Final PV after devaluing the results by Urgency and Risk.

**Table 4**

| Candidate Pair Paths and PV | | |
|---|---|---|
| Path No | Init. PV | Final PV |
| 2 | 15 | 12.8 |
| 4 | 15 | 11 |
| 8 | 15 | 12.8 |
| 10 | 15 | 11.2 |
| 12 | 15 | 7.4 |
| 19 | 15 | 15 |
| 22 | 15 | 11.4 |
| 24 | 15 | 13.4 |

Returning to figure 7B, in block 717, the processing circuitry 603 determines a best path based on the final path value for each candidate pair path. The best path is path number 19 with the highest final PV of 15. Besides being the best path, this path also happens to include all agent/client pairs with the highest EM. In some aspects, when there are more than one candidate pair paths with the highest final PV, the first candidate pair path in the list having the highest final PV is selected as the best path. Other ways of selecting the best path when there are more than one candidate paths with the highest final PV can be selecting the candidate path that does not have urgent agent/client pairs and/or risky agent/client pairs, selecting the candidate path that has the fewest number of urgent agent/client pairs, selecting the candidate path that has the fewest number of risky agent/client pairs, selecting a random candidate path, etc.

In block 719, the processing circuitry 603 derives at least one engagement decision based on the best path. With path number 19, since there are no urgent agent/client pairs, there is no need to commit agents to engage any clients. The engagement decision to make is that all agents will stay on their course without changes, until the next MAEDS cycle.

In block 721, the processing circuitry 603 transmits the at least one engagement decision towards agents in the best path.

In the above example, there were no urgent agent/client pairs in the best path. This is not always the case. Turning to Figure 13, where there are urgent agent/client pairs in the best path, the processing circuitry 603 derives the at least one engagement decision based on the best path by responsive to the best path having an urgent agent/pair and the engagement capability of the urgent agent/pair is within a decision threshold or a time-to-go is within a time threshold, determining in block 1301 a first action for the agent in the urgent agent/client pair to perform. In block 1303, the processing circuitry 603 transmits the first action towards the agent in the urgent agent/client pair responsive to determining the first action.

In block 1305, the processing circuitry 603 responsive to agents in agent/client pairs in the best path not being urgent agent/client pairs, determines a second action for the agents in agent/client pairs in the best path to take wherein the second action to take for the agents in agent/client pairs in the best path is to stay the course. In block 1307, the processing circuitry 603 transmits the second action to stay the course towards the agents in agent/client pairs in the best path that are not an urgent agent/client pair.

While the scope of protection is determined by the appended claims, realizations of the present disclosure can be made in many ways including, but not limited to, those according to the following Clauses:
Clause 1. A method of generating a coordinated set of engagement parameters by a processor in a multiple agent engagement decision system, the method comprising:
   determining agent/client pairs in at least one priority tier based on a number of clients and a number of agents, wherein each agent/client pair has an agent, a client and a client rank of the client;
   determining a matrix value for each agent/client pair based on the client rank of the client of the agent/client pair;
   determining an engagement capability parameter for each agent/client pair; setting the matrix value for each disallowed agent/ranked client value to a zero value, wherein a disallowed agent/client pair has an engagement capability margin that is below a defined threshold;
   evaluating a plurality of possible engagement options wherein each engagement option is a pair path from an agent/client pair having a highest client rank to an agent/client pair having a lowest client rank with each pair path having an agent/client pair for each client in the at least one priority tier;
   for each engagement option, computing an initial path value of each pair path of the engagement option;
   determining candidate pair paths by determining pair paths having a highest initial path value, wherein the pair paths having the highest initial path value are candidate pair paths; for each candidate pair path, decreasing the initial path value of the candidate pair path based on agent/client pairs in the candidate pair path that are urgent agent/client pairs and based on agent/client pairs in the candidate pair path that are risky agent/client pairs to derive a final path value for the candidate pair path;
   determining a best path based on the final path value of each candidate pair path;
   deriving at least one engagement decision based on the best path; and
   transmitting the at least one engagement decision towards agents in the best path.
Clause 2. The method of Clause 1 further comprising:
   determining agent/client pairs that are urgent agent/client pairs and agent/client pairs that are risky agent/client pairs by:
   determining that an agent/client pair is an urgent agent/client pair responsive to the engagement capability parameter of the agent/client pair being within a first threshold and a second threshold; and
   determining that an agent/client pair is a risky agent/client pair responsive to the engagement capability parameter of the agent/client pair being below a risk threshold.
Clause 3. The method of any of Clauses 1-2 wherein determining agent/client pairs in the at least one priority tier based on the number of clients and the number of agents comprises:
   dynamically obtaining, from a status processor, the number of clients, the number of agents, and for each client, the client rank of the client, and;
   determining, based on the number of clients and a number of agents, the at least one priority tier; and
   grouping a number of agent/client pairs into the at least one priority tier according to a client rank of the client in an agent/client pair.
Clause 4. The method of any of Clauses 1-3, further comprising deriving a value matrix of the at least one priority tier based on the number of agents and the number of clients in the at least one priority tier, wherein the value matrix has a number of rows that is less than or equal to a number of agents that needs a decision and is less than or equal to the number of clients.
Clause 5. The method of Clause 4 wherein deriving the value matrix further comprises enabling more than one agent to engage a client by adding a lower ranked row to the value matrix for the client.
Clause 6. The method of any of Clauses 4-5, wherein each engagement option is a pair path from an agent/client pair in a top row of the value matrix to an agent/client pair in each intermediate row of the value matrix and to an agent/client pair in a bottom row of the value matrix wherein each agent and client in each agent/client in the pair path are different from other agents and clients in agent/client pairs of the pair path.
Clause 7. The method of any of Clauses 4-6, further comprising:
   setting a matrix value of each agent/client pair in a bottom row of the value matrix to a value of 1; and
   setting the matrix value of each agent/client pair having successively higher client rank to a successively higher value by a power of 2^{N-1} where N is a number of a row in which the agent/client pair is located in the value matrix with the bottom row having a matrix value of 1.
Clause 8. The method of Clause 7, wherein decreasing the initial path value of the candidate pair path based on agent/client pairs in the high value pair path that are urgent agent/client pairs and based on agent/client pairs in the high value pair path that are risky agent/client pairs comprises:
   for each agent/client pair in the candidate pair path that is an urgent agent/client pair, decreasing the initial path value of the candidate pair path by the matrix value of the urgent agent/client; and
   for each agent/client pair in the candidate path that is a risky agent/client pair, decreasing the initial path value of the candidate pair path by a risk value based on the engagement capability parameter of the risky agent/client pair.
Clause 9. The method of any of Clauses 1-8,
   wherein deriving the at least one engagement decision based on the best path comprises:
   responsive to the best path having an urgent agent/pair and the engagement capability of the urgent agent/pair is within a decision threshold or a time-to-go is within a time threshold, determining a first action for the agent in the urgent agent/client pair to perform; and
   responsive to agents in agent/client pairs in the best path not being urgent agent/client pairs, determining a second action for the agents in agent/client pairs in the best path to take wherein the second action to take for the agents in agent/client pairs in the best path is to stay the course; and
   wherein transmitting the at least one engagement decision towards agents in the best path comprises:
   transmitting the first action towards the agent in the urgent agent/client pair responsive to determining the first action; and
   transmitting the second action to stay the course towards the agents in agent/client pairs in the best path that are not an urgent agent/client pair.
Clause 10. A computer program having a non-transitory computer readable medium comprising computer-executable instructions that when executed on a processor comprised in a device cause the device to perform operations comprising:
   determining agent/client pairs in at least one priority tier based on a number of clients and a number of agents, wherein each agent/client pair has an agent, a client and a client rank of the client;
   determining a matrix value for each agent/client pair based on the client rank of the client of the agent/client pair;
   determining an engagement capability parameter for each agent/client pair;
   setting the matrix value for each disallowed agent/ranked client value to a zero value, wherein a disallowed agent/client pair has an engagement capability margin that is below a defined threshold;
   evaluating a plurality of possible engagement options wherein each engagement option is a pair path from an agent/client pair having a highest client rank to an agent/client pair having a lowest client rank with each pair path having an agent/client pair for each client in the at least one priority tier;
   for each engagement option, computing an initial path value of each pair path of the engagement option;
   determining candidate pair paths by determining pair paths having a highest initial path value, wherein the pair paths having the highest initial path value are candidate pair paths; for each candidate pair path, decreasing the initial path value of the candidate pair path based on agent/client pairs in the candidate pair path that are urgent agent/client pairs and based on agent/client pairs in the candidate pair path that are risky agent/client pairs to derive a final path value for the candidate pair path;
   determining a best path based on the final path value of each candidate pair path; deriving at least one engagement decision based on the best path; and
   transmitting the at least one engagement decision towards agents in the best path.
Clause 11. The computer program of Clause 10 wherein the non-transitory computer readable medium comprises further computer-executable instructions that when executed cause the device to perform operations comprising:
   determining agent/client pairs that are urgent agent/client pairs and agent/client pairs that are risky agent/client pairs by:
   determining that an agent/client pair is an urgent agent/client pair responsive to the engagement capability parameter of the agent/client pair being within a first threshold and a second threshold;
   determining that an agent/client pair is a risky agent/client pair responsive to the engagement capability parameter of the agent/client pair being below a risk threshold.
Clause 12. The computer program of any of Clauses 10-11 wherein determining agent/client pairs in the at least one priority tier based on the number of clients and the number of agents comprises:
   dynamically obtaining, from a status processor, the number of clients, the number of agents, and for each client, the client rank of the client;
   determining, based on the number of clients and a number of agents, the at least one priority tier; and
   grouping a number of agent/client pairs into the at least one priority tier according to a client rank of the client in an agent/client pair.
Clause 13. The computer program of any of Clauses 10-12 wherein the non-transitory computer readable medium comprises further computer-executable instructions that when executed cause the device to perform operations comprising: deriving a value matrix of the at least one priority tier based on the number of agents and the number of clients in the at least one priority tier, wherein the value matrix has a number of rows that is less than or equal to a number of agents that needs a decision and is less than or equal to the number of clients.
Clause 14. The computer program of Clause 13 wherein the non-transitory computer readable medium comprises further computer-executable instructions that when executed cause the device to perform operations comprising enabling more than one agent to engage a client by adding a lower ranked row to the value matrix for the client.
Clause 15. The computer program of any of Clauses 13-14, wherein each engagement option is a pair path from an agent/client pair in a top row of the value matrix to an agent/client pair in each intermediate row of the value matrix and an agent/client pair in a bottom row of the value matrix wherein each agent and client in each agent/client in the pair path are different from other agents and clients in agent/client pairs of the pair path.
Clause 16. The computer program of any of Clauses 13-15, wherein the non-transitory computer readable medium comprises further computer-executable instructions that when executed cause the device to perform operations comprising:
   setting a matrix value of each agent/client pair in the bottom row to a value of 1; and
   setting the matrix value of each agent/client pair having successively higher client rank to a successively higher value by a power of 2^{N-1} where N is a number of a row in which the agent/client pair is located in the value matrix with the bottom row having a matrix value of 1.
Clause 17. The computer program of any of Clauses 13-16, wherein decreasing the initial path value of the candidate pair path based on agent/client pairs in the high value pair path that are urgent agent/client pairs and based on agent/client pairs in the high value pair path that are risky agent/client pairs comprises:
   for each agent/client pair in the candidate path that is an urgent agent/client pair, decreasing the initial path value of the high value pair path by the matrix value of the urgent agent/client; and
   for each agent/client pair in the candidate path that is a risky agent/client pair, decreasing the initial path value of the high value pair path by a risk value based on the engagement capability parameter of the risky agent/client pair.
Clause 18. The computer program of any of Clauses 10-17,
   wherein deriving the at least one engagement decision based on the best path comprises:
   responsive to the best path having an urgent agent/pair and the engagement capability of the urgent agent/pair is within a decision threshold or a time-to-go is within a time threshold, determining a first action for the agent in the urgent agent/client pair to perform;
   responsive to agents in agent/client pairs in the best path not being urgent agent/client pairs, determining a second action for the agents in agent/client pairs in the best path to take wherein the second action to take for the agents in agent/client pairs in the best path is to stay the course; and
   wherein transmitting the at least one engagement decision towards agents in the best path comprises:
   transmitting the first action towards the agent in the urgent agent/client pair responsive to determining the first action; and
   transmitting the second action to stay the course towards the agents in agent/client pairs in the best path that are not an urgent agent/client pair.
Clause 19. An apparatus configured to generate a coordinated set of engagement parameters by a processor in a multiple agent engagement decision system, the apparatus comprising:
   at least one processor;
   memory communicatively coupled to the processor, said memory comprising instructions executable by the processor, which cause the processor to perform operations comprising:
      determining agent/client pairs in at least one priority tier based on a number of clients and a number of agents, wherein each agent/client pair has an agent, a client and a client rank of the client;
      determining a matrix value for each agent/client pair based on the client rank of the client of the agent/client pair;
      determining an engagement capability parameter for each agent/client pair;
      setting the matrix value for each disallowed agent/ranked client value to a zero value, wherein a disallowed agent/client pair has an engagement capability margin that is below a defined threshold;
      evaluating a plurality of possible engagement options wherein each engagement option is a pair path from an agent/client pair having a highest client rank to an agent/client pair having a lowest client rank with each pair path having an agent/client pair for each client in the at least one priority tier;
      for each engagement option, computing an initial path value of each pair path of the engagement option;
      determining candidate pair paths by determining pair paths having a highest initial path value, wherein the pair paths having the highest initial path value are candidate pair paths;
      for each candidate pair path, decreasing the initial path value of the candidate pair path based on agent/client pairs in the candidate pair path that are urgent agent/client pairs and based on agent/client pairs in the candidate pair path that are risky agent/client pairs to derive a final path value for the candidate pair path;
      determining a best path based on the final path value of each candidate pair path;
      deriving at least one engagement decision based on the best path; and transmitting the at least one engagement decision towards agents in the best path.
Clause 20. The apparatus of Clause 19, wherein deriving the at least one engagement decision based on the best path comprises:
   responsive to the best path having an urgent agent/pair and the engagement capability of the urgent agent/pair is within a decision threshold or a time-to-go is within a time threshold, determining a first action for the agent in the urgent agent/client pair to perform;
   responsive to agents in agent/client pairs in the best path not being urgent agent/client pairs, determining a second action for the agents in agent/client pairs in the best path to take wherein the second action to take for the agents in agent/client pairs in the best path is to stay the course; and
   wherein transmitting the at least one engagement decision towards agents in the best path comprises:
   transmitting the first action to the agent in the urgent agent/client pair responsive to determining the first action; and
   transmitting the second action to stay the course to the agents in agent/client pairs in the best path not being an urgent agent/client pair.As can be seen by the foregoing, the MAEDS described herein provides timely coordinated client engagement decisions that are beneficial for saving agent engagement capability, engage as many high value clients as number of agents (ensure favoring highest value clients with one-on-one service), and flexible to client environment changes. The client environment dynamics may include the evolution of clients arriving, client value awareness, engagement opportunity, managerial directives, agent resources, engagement preclusions left by past service decisions, changing agent and client positions and status, and engagement urgency.

The MAEDS described herein addresses the difficulties discussed herein. Specifically, the MAEDS addresses difficulties in making multiple agent engagement decisions, which include difficulties in sorting out overlapping regions of client engagement capability, in balancing agent resource limitations with capability to serve highest value clients, and in fully using all agents so that as many high value clients are engaged as there are agents. The MAEDS also addresses difficulties in making timely coordinated multiple agent engagement decisions. Timely decisions become difficult to appropriate when client value environment fluctuates over time, and so does the awareness capability of client value. The MAEDS also addresses difficulties in time and resource management to automatically adjust to new change drivers as the engagement evolves. These change drivers may include arrival of new clients, unexpected obstacles and client activities, and unexpected agent health status or resource capability. The MAEDS also addresses difficulties in avoiding hasty decisions that lead to waste of agent engagement capability and reduction of engagement options, thus leading to poor client service results.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the examples disclosed herein may be applied to any other example, wherever appropriate. Likewise, any advantage of any of the examples may apply to any other examples, and vice versa. Other objectives, features and advantages of the enclosed examples will be apparent from the following description.

In the above-description of various examples of present inventive concepts, it is to be understood that the terminology used herein is for the purpose of describing particular examples only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some examples could be termed a second element/operation in other examples without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Examples are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, examples of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the examples without substantially departing from the principles of the present inventive concepts. All such variations and modifications are intended to be included herein within the scope of present inventive concepts. Accordingly, the above disclosed subject matter is to be considered illustrative, and not restrictive, and the examples are intended to cover all such modifications, enhancements, and other examples, which fall within the spirit and scope of present inventive concepts. Thus, to the maximum extent allowed by law, the scope of present inventive concepts are to be determined by the broadest permissible interpretation of the present disclosure including the examples and their equivalents, and shall not be restricted or limited by the foregoing detailed description.

## Claims

1. A computer-implemented method of generating a coordinated set of engagement parameters by a processor in a multiple agent engagement decision system, the method comprising:
determining (701) agent/client pairs in at least one priority tier based on a number of clients and a number of agents, wherein each agent/client pair has an agent, a client and a client rank of the client;
determining (703) a matrix value for each agent/client pair based on the client rank of the client of the agent/client pair;
determining (705) an engagement capability parameter for each agent/client pair;
setting (707) the matrix value for each disallowed agent/ranked client value to a zero value, wherein a disallowed agent/client pair has an engagement capability margin that is below a defined threshold;
evaluating (709) a plurality of possible engagement options wherein each engagement option is a pair path from an agent/client pair having a highest client rank to an agent/client pair having a lowest client rank with each pair path having an agent/client pair for each client in the at least one priority tier;
for each engagement option, computing (711) an initial path value of each pair path of the engagement option;
determining (713) candidate pair paths by determining pair paths having a highest initial path value, wherein the pair paths having the highest initial path value are candidate pair paths;
for each candidate pair path, decreasing (715) the initial path value of the candidate pair path based on agent/client pairs in the candidate pair path that are urgent agent/client pairs and based on agent/client pairs in the candidate pair path that are risky agent/client pairs to derive a final path value for the candidate pair path;
determining (717) a best path based on the final path value of each candidate pair path;
deriving (719) at least one engagement decision based on the best path; and
transmitting (721) the at least one engagement decision towards agents in the best path.

2. The method of Claim 1 further comprising:
determining agent/client pairs that are urgent agent/client pairs and agent/client pairs that are risky agent/client pairs by:
determining (1101) that an agent/client pair is an urgent agent/client pair responsive to the engagement capability parameter of the agent/client pair being within a first threshold and a second threshold; and
determining (1103) that an agent/client pair is a risky agent/client pair responsive to the engagement capability parameter of the agent/client pair being below a risk threshold.

3. The method of Claim 1 or 2 wherein determining agent/client pairs in the at least one priority tier based on the number of clients and the number of agents comprises:
dynamically obtaining (801), from a status processor, the number of clients, the number of agents, and for each client, the client rank of the client;
determining (803), based on the number of clients and a number of agents, the at least one priority tier; and
grouping (805) a number of agent/client pairs into the at least one priority tier according to a client rank of the client in an agent/client pair.

4. The method of any one of Claims 1-3, further comprising deriving (901) a value matrix of the at least one priority tier based on the number of agents and the number of clients in the at least one priority tier, wherein the value matrix has a number of rows that is less than or equal to a number of agents that needs a decision and is less than or equal to the number of clients.

5. The method of Claim 4 wherein deriving the value matrix further comprises enabling (903) more than one agent to engage a client by adding a lower ranked row to the value matrix for the client.

6. The method of Claim 4 or 5, wherein each engagement option is a pair path from an agent/client pair in a top row of the value matrix to an agent/client pair in each intermediate row of the value matrix and to an agent/client pair in a bottom row of the value matrix wherein each agent and client in each agent/client in the pair path are different from other agents and clients in agent/client pairs of the pair path.

7. The method of any one of Claims 4-6, further comprising:
setting (1001) a matrix value of each agent/client pair in a bottom row of the value matrix to a value of 1; and
setting (1003) the matrix value of each agent/client pair having successively higher client rank to a successively higher value by a power of 2^{N-1} where N is a number of a row in which the agent/client pair is located in the value matrix with the bottom row having a matrix value of 1.

8. The method of Claim 7, wherein decreasing the initial path value of the candidate pair path based on agent/client pairs in the high value pair path that are urgent agent/client pairs and based on agent/client pairs in the high value pair path that are risky agent/client pairs comprises:
for each agent/client pair in the candidate pair path that is an urgent agent/client pair, decreasing (1201) the initial path value of the candidate pair path by the matrix value of the urgent agent/client; and
for each agent/client pair in the candidate path that is a risky agent/client pair, decreasing (1203) the initial path value of the candidate pair path by a risk value based on the engagement capability parameter of the risky agent/client pair.

9. The method of any one of Claims 1-8,
wherein deriving the at least one engagement decision based on the best path comprises:
responsive to the best path having an urgent agent/pair and the engagement capability of the urgent agent/pair is within a decision threshold or a time-to-go is within a time threshold, determining (1301) a first action for the agent in the urgent agent/client pair to perform; and
responsive to agents in agent/client pairs in the best path not being urgent agent/client pairs, determining (1305) a second action for the agents in agent/client pairs in the best path to take wherein the second action to take for the agents in agent/client pairs in the best path is to stay the course; and
wherein transmitting the at least one engagement decision towards agents in the best path comprises:
transmitting (1303) the first action to the agent in the urgent agent/client pair responsive to determining the first action; and
transmitting (1307) the second action to stay the course to the agents in agent/client pairs in the best path not being an urgent agent/client pair.

10. A computer program having a non-transitory computer readable medium comprising computer-executable instructions that when executed on a processor comprised in a device cause the device to perform operations comprising:
determining (701) agent/client pairs in at least one priority tier based on a number of clients and a number of agents, wherein each agent/client pair has an agent, a client and a client rank of the client;
determining (703) a matrix value for each agent/client pair based on the client rank of the client of the agent/client pair;
determining (705) an engagement capability parameter for each agent/client pair;
setting (707) the matrix value for each disallowed agent/ranked client value to a zero value, wherein a disallowed agent/client pair has an engagement capability margin that is below a defined threshold;
evaluating (709) a plurality of possible engagement options wherein each engagement option is a pair path from an agent/client pair having a highest client rank to an agent/client pair having a lowest client rank with each pair path having an agent/client pair for each client in the at least one priority tier;
for each engagement option, computing (711) an initial path value of each pair path of the engagement option;
determining (713) candidate pair paths by determining pair paths having a highest initial path value, wherein the pair paths having the highest initial path value are candidate pair paths;
for each candidate pair path, decreasing (715) the initial path value of the candidate pair path based on agent/client pairs in the candidate pair path that are urgent agent/client pairs and based on agent/client pairs in the candidate pair path that are risky agent/client pairs to derive a final path value for the candidate pair path;
determining (717) a best path based on the final path value of each candidate pair path;
deriving (719) at least one engagement decision based on the best path; and
transmitting (721) the at least one engagement decision towards agents in the best path.

11. The computer program of Claim 10 wherein the non-transitory computer readable medium comprises further computer-executable instructions that when executed cause the device to perform operations comprising:
determining agent/client pairs that are urgent agent/client pairs and agent/client pairs that are risky agent/client pairs by:
determining (1101) that an agent/client pair is an urgent agent/client pair responsive to the engagement capability parameter of the agent/client pair being within a first threshold and a second threshold; and
determining (1103) that an agent/client pair is a risky agent/client pair responsive to the engagement capability parameter of the agent/client pair being below a risk threshold.

12. The computer program of Claim 10 or 11 wherein determining agent/client pairs in the at least one priority tier based on the number of clients and the number of agents comprises:
dynamically obtaining (801), from a status processor, the number of clients, the number of agents, and for each client, the client rank of the client;
determining (803), based on the number of clients and a number of agents, the at least one priority tier; and
grouping (805) a number of agent/client pairs into the at least one priority tier according to a client rank of the client in an agent/client pair.

13. The computer program of any one of Claims 10-12 wherein the non-transitory computer readable medium comprises further computer-executable instructions that when executed cause the device to perform operations comprising: deriving (901) a value matrix of the at least one priority tier based on the number of agents and the number of clients in the at least one priority tier, wherein the value matrix has a number of rows that is less than or equal to a number of agents that needs a decision and is less than or equal to the number of clients.

14. The computer program of Claim 13, wherein the non-transitory computer readable medium comprises further computer-executable instructions that when executed cause the device to perform operations comprising enabling (903) more than one agent to engage a client by adding a lower ranked row to the value matrix for the client.

15. The computer program of Claim 13 or 14, wherein each engagement option is a pair path from an agent/client pair in a top row of the value matrix to an agent/client pair in each intermediate row of the value matrix and an agent/client pair in a bottom row of the value matrix wherein each agent and client in each agent/client in the pair path are different from other agents and clients in agent/client pairs of the pair path.
